# EUROPEAN PATENT SPECIFICATION

(11) **EP 4 357 928 B1**
(45) Date of publication and mention of the grant of the patent: **04.06.2025**
(21) Application number: 23202699.7
(22) Date of filing: 10.10.2023
(51) Int. Cl.: G06F 12/0868

(54) **METHODS AND SYSTEM FOR EFFICIENT ACCESS TO SOLID STATE DRIVE**
VERFAHREN UND SYSTEM FÜR EFFIZIENTEN ZUGANG ZU EINEM FESTKÖRPERLAUFWERK
PROCÉDÉS ET SYSTÈME D'ACCÈS EFFICACE À UN DISQUE ÉLECTRONIQUE

(30) Priority: 19.10.2022 US 202263417504 P; 13.12.2022 US 202218080211
(43) Date of publication of application: 24.04.2024
(73) Proprietor: Samsung Electronics Co., Ltd., Suwon-si, Gyeonggi-do 16677 (KR)
(72) Inventor: NGUYEN, Marie Mai, San Jose, CA 95134 (US); PITCHUMANI, Rekha, San Jose, CA 95134 (US); KI, Yang Seok, San Jose, CA 95134 (US)
(74) Representative: Kuhnen & Wacker Patent- und Rechtsanwaltsbüro PartG mbB

(56) References cited:
- US-A1- 2016 103 765
- US-A1- 2022 083 236

## Description

### TECHNICAL AREA

The present disclosure relates generally to solid state drives (SSDs), and more particularly, to a method and system for efficiently accessing an SSD.

### BACKGROUND

Big data applications handle relatively large datasets. SSDs are widely used as a hardware feature in cloud infrastructure for big data services. SSDs are well suited for big data applications because they provide fast storage performance, and are efficient and cost-effective. Specifically, input/output (I/O) intensive operations can be accelerated by using an SSD architecture. The statements above are provided for illustrative purposes only and are not intended to constitute an admission of prior art.

US 2022/083236 A1 discloses apparatuses and methods related to a memory system with cache line data.

US 2016/103765 A1 discloses apparatus, systems, and methods that implement a less-recently-used data eviction mechanism for identifying a memory block of a cache for eviction.

### SUMMARY

The invention is set out in the appended set of claims. Embodiments enable efficient access to an SSD hardware cache.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a diagram illustrating a cache replacement policy;
FIG. 2 is a diagram illustrating an SSD controller, according to an embodiment;
FIG. 3 is a diagram illustrating an SSD controller in a read-only cache mode, according to an embodiment;
FIG. 4 is a chart illustrating preloading of data offline, according to an embodiment;
FIG. 5 is a diagram illustrating an SSD controller in a write mode, according to an embodiment;
FIG. 6 is flowchart illustrating a method for efficiently accessing an SSD hardware cache, according to an embodiment;
FIG. 7 is a block diagram illustrating an electronic device in a network environment, according to an embodiment; and
FIG. 8 is a diagram illustrating a storage system, according to an embodiment.

### DETAILED DESCRIPTION

Hereinafter, embodiments of the present disclosure are described in detail with reference to the accompanying drawings. It should be noted that the same elements will be designated by the same reference numerals although they are shown in different drawings. In the following description, specific details such as detailed configurations and components are merely provided to assist with the overall understanding of the embodiments of the present disclosure. Therefore, it should be apparent to those skilled in the art that various changes and modifications of the embodiments described herein may be made without departing from the scope of the present disclosure. In addition, descriptions of well-known functions and constructions are omitted for clarity and conciseness. The terms described below are terms defined in consideration of the functions in the present disclosure, and may be different according to users, intentions of the users, or customs. Therefore, the definitions of the terms should be determined based on the contents throughout this specification.

The present disclosure may have various modifications and various embodiments, among which embodiments are described below in detail with reference to the accompanying drawings. However, it should be understood that the present disclosure is not limited to the embodiments, but includes all modifications, equivalents, and alternatives within the scope of the present disclosure.

Although the terms including an ordinal number such as first, second, etc. may be used for describing various elements, the structural elements are not restricted by the terms. The terms are only used to distinguish one element from another element. For example, without departing from the scope of the present disclosure, a first structural element may be referred to as a second structural element. Similarly, the second structural element may also be referred to as the first structural element. As used herein, the term "and/or" includes any and all combinations of one or more associated items.

The terms used herein are merely used to describe various embodiments of the present disclosure but are not intended to limit the present disclosure. Singular forms are intended to include plural forms unless the context clearly indicates otherwise. In the present disclosure, it should be understood that the terms "include" or "have" indicate existence of a feature, a number, a step, an operation, a structural element, parts, or a combination thereof, and do not exclude the existence or probability of the addition of one or more other features, numerals, steps, operations, structural elements, parts, or combinations thereof.

Unless defined differently, all terms used herein have the same meanings as those understood by a person skilled in the art to which the present disclosure belongs. Terms such as those defined in a generally used dictionary are to be interpreted to have the same meanings as the contextual meanings in the relevant field of art, and are not to be interpreted to have ideal or excessively formal meanings unless clearly defined in the present disclosure.

The electronic device, according to one embodiment, may be one of various types of electronic devices utilizing storage devices. The electronic device may use any suitable storage standard, such as, for example, peripheral component interconnect express (PCIe), nonvolatile memory express (NVMe), NVMe-over-fabric (NVMeoF), advanced extensible interface (AXI), ultra path interconnect (UPI), ethernet, transmission control protocol/Internet protocol (TCP/IP), remote direct memory access (RDMA), RDMA over converged ethernet (ROCE), fibre channel (FC), infiniband (IB), serial advanced technology attachment (SATA), small computer systems interface (SCSI), serial attached SCSI (SAS), Internet wide-area RDMA protocol (iWARP), and/or the like, or any combination thereof. In some embodiments, an interconnect interface may be implemented with one or more memory semantic and/or memory coherent interfaces and/or protocols including one or more compute express link (CXL) protocols such as CXL.mem, CXL.io, and/or CXL.cache, Gen-Z, coherent accelerator processor interface (CAPI), cache coherent interconnect for accelerators (CCIX), and/or the like, or any combination thereof. Any of the memory devices may be implemented with one or more of any type of memory device interface including double data rate (DDR), DDR2, DDR3, DDR4, DDR5, low-power DDR (LPDDRX), open memory interface (OMI), NVlink high bandwidth memory (HBM), HBM2, HBM3, and/or the like. The electronic devices may include, for example, a portable communication device (*e.g.,* a smart phone), a computer, a portable multimedia device, a portable medical device, a camera, a wearable device, or a home appliance. However, an electronic device is not limited to those described above.

The terms used in the present disclosure are not intended to limit the present disclosure but are intended to include various changes, equivalents, or replacements for a corresponding embodiment. With regard to the descriptions of the accompanying drawings, similar reference numerals may be used to refer to similar or related elements. A singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, terms such as "1^{st}," "2nd," "first," and "second" may be used to distinguish a corresponding component from another component, but are not intended to limit the components in other aspects (*e.g.*, importance or order). It is intended that if an element (*e.g.,* a first element) is referred to, with or without the term "operatively" or "communicatively", as "coupled with," "coupled to," "connected with," or "connected to" another element (*e.g.,* a second element), it indicates that the element may be coupled with the other element directly (*e.g*., wired), wirelessly, or via a third element.

As used herein, the term "module" may include a unit implemented in hardware, software, firmware, or combination thereof, and may interchangeably be used with other terms, for example, "logic," "logic block," "part," and "circuitry." A module may be a single integral component, or a minimum unit or part thereof, adapted to perform one or more functions. For example, according to one embodiment, a module may be implemented in a form of an application-specific integrated circuit (ASIC), a co-processor, or field programmable gate arrays (FPGAs).

Machine learning (ML) use-cases, such as, for example, deep learning recommendation model (DLRM) interference and training, involve accessing data at a smaller granularity (e.g., 64 bytes versus 4 kilobytes) and follow a very skewed Pareto distribution. Latency-sensitive use cases require fast I/O accesses, but reading from a NAND flash memory can be relatively slow.

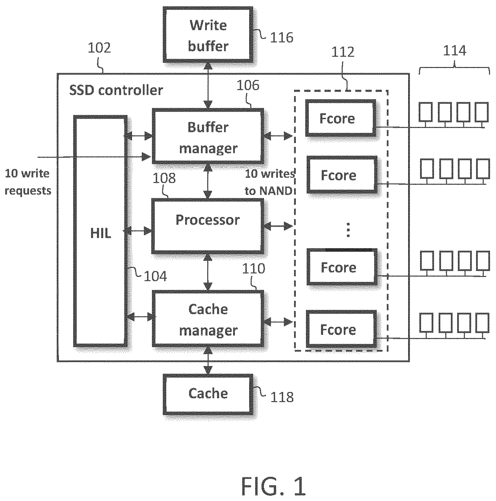

A standard cache replacement policy in an SSD may lead to pollution of the cache, because every read/write request is provided to the NAND flash memory. Accordingly many small write requests may be detrimental to SSD performance and endurance. As shown in FIG. 1, the same number of requests received at an SSD controller are provided to the NAND flash memory.

FIG. 1 is a diagram illustrating a cache replacement policy. An SSD controller 102 of an SSD (or memory device) includes a host interface layer (HIL) 104, which may include a host controller interfaced to a host side, and an SSD interface providing an abstracted application programming interface (API) to the host controller. Within the SSD controller 102, the HIL 104 is in communication with a buffer manager 106, a processor 108, and a cache manager 110 within the SSD controller 102. The buffer manager 106, the processor 108, and the cache manager 110 are also in communication with multiple flash cores 112, which interface with pages of a NAND flash memory 114 of the SSD. The buffer manager 106 is communication with a write buffer 116 of the SSD. The cache manager 110 is in communication with a cache 118 (e.g., dynamic random access memory (DRAM)) of the SSD.

Every read or write request received from a host application, through the HIL 104 of the SSD controller 102, is provided to the NAND flash memory 114 of the SSD. For example, when ten write requests received via the HIL 104 are provided to the buffer manager 106, each of the ten write requests are provided to the NAND flash memory 114, resulting in pollution of the cache.

Embodiments of the disclosure optimize the cache manager 122 such that requested data is read from or written to the SSD more efficiently via the cache 118.

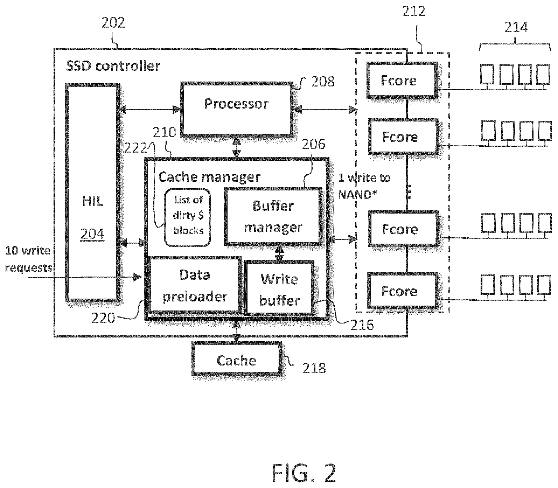

FIG. 2 is a diagram illustrating an SSD controller, according to an embodiment. An SSD controller 202 includes an HIL 204, which is in communication with a processor 208 and a cache manager 210 within the SSD controller 202. The processor 208 and the cache manager 210 are in communication with multiple flash cores 212-1 to 212-n, which interface with pages of a NAND flash memory 214 of the SSD. The cache manager 210 includes a buffer manager 206, a write buffer 216, a data preloader 220, and a list of dirty cache blocks 222. The cache manager 210 is in communication with a cache 218 of the SSD.

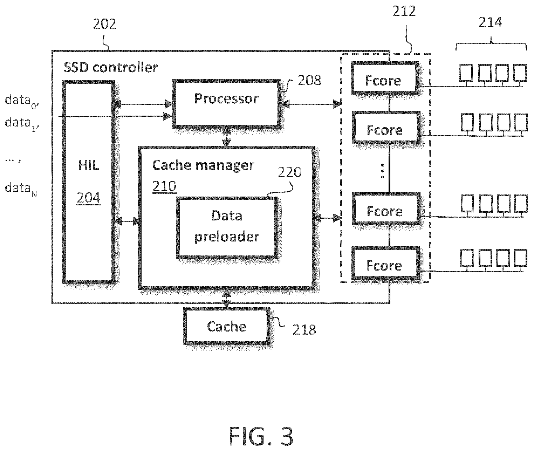

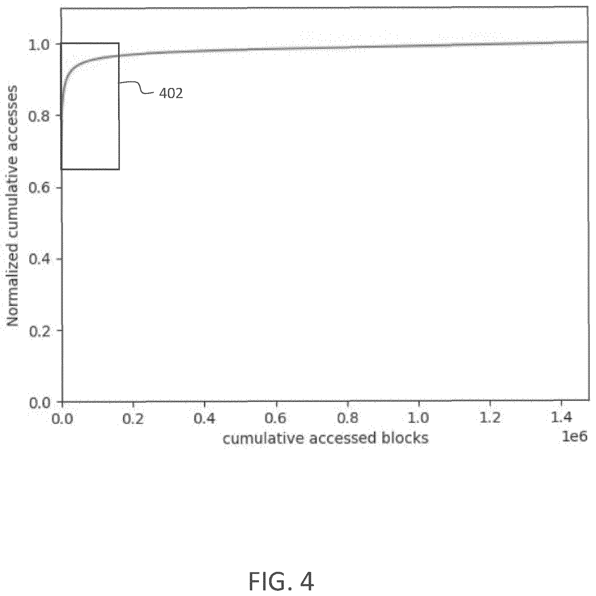

When the SSD controller 202 is in a read-only cache mode, the cache is preloaded with data while the SSD is offline. Accordingly, a cache eviction and/or update is not required to be performed during runtime, resulting in less cache pollution. The read-only cache mode is described in greater detail below with respect to FIGS. 3 and 4.

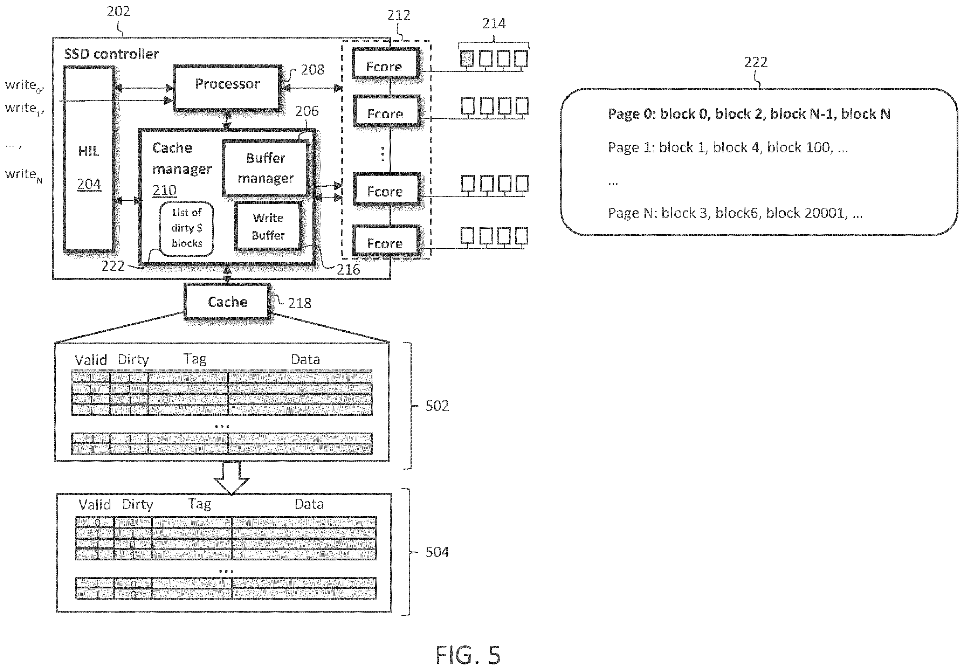

Further, when the SSD controller 202 is in a write mode, write requests to the NAND flash memory 214 are minimized by writing data to the cache 218 at a small granularity (e.g., 64 bytes). These data of each write requests to the cache 218 has a smaller size than that of a page of the NAND flash memory 214. For example, ten write requests received from a host application, via the HIL 204, are provided to the cache manager 210. Data is written to the cache 218 in accordance with the ten write requests. A single write request for multiple cache blocks corresponding to a single page of the NAND flash memory 214 may be provided from the cache manager 210 to the NAND flash memory 214. The write mode of the SSD controller 202 is described in greater detail below with respect to FIG. 5.

FIG. 3 is a diagram illustrating an SSD controller in a read-only cache mode, according to an embodiment. In the read-only cache mode, the data preloader 220 of the cache manager 210 may be user-programmed and heuristics-based in order to preload the cache 218 offline at regular intervals. Faster cache access is enabled when there are no cache evictions and/or updates at runtime. For a given cache size, the preloading of the cache also results in less cache pollution and a higher cache hit rate than a similarly-sized least recently used (LRU) cache or least frequently used (LFU) cache.

For example, a read request may be sent from a host application, to the SSD controller 202. The cache manager 210 determines whether data corresponding to the read request is in the preloaded cache 218. If the data is in the cache 218, the cache manager 210 retrieves the data from the preloaded cache 218, and the requested data is provided to the host application. When the data is not in the preloaded cache 218, the data is read from the NAND flash memory 214, stored in the cache 218, and then provided to the host application. Accordingly, preloading data to the cache 218 offline may prevent latency caused by NAND flash memory data retrieval during runtime.

FIG. 4 is a chart illustrating preloading of data offline, according to an embodiment. Normalized cumulative accesses are plotted versus cumulative accessed vectors. The normalized cumulative accesses are shown to increase during the first 0.2 cumulative accessed vectors, before leveling off, illustrating the offline preloading of the cache at 402.

FIG. 5 is a diagram illustrating an SSD controller in a write mode, according to an embodiment. The SSD controller 202 minimizes the number of write requests provided to the NAND flash memory 214. For example, N write requests may be provided from a host application to the HIL 204 and the processor 208 of the SSD controller 202. The cache manager 210 writes data corresponding to these write requests only to the cache 218. A dirty bit is set to 1 for each block of the cache 218 having this newly written data. The list of dirty cache blocks 222 in the cache manager 210 maintains a list of dirty blocks in the cache 218 for each page of the NAND flash memory 214.

Upon filling the cache 218 with data corresponding to the N write requests, and receiving a subsequent write request (N+1), data from a cache block must be evicted in order to store data of write request N+1. For example, data from cache block 0 may be chosen for eviction from the cache 218 to the NAND flash memory 214. The cache manager 206 refers to the list of dirty cache blocks 222, and determines other dirty cache blocks that belong to a same page of the NAND flash memory 214 as cache block 0. For example, as shown in FIG. 5, blocks 0, 2, N-1, and N belong to page 0. Data from all dirty blocks belonging to a same page (e.g., page 0) as block 0 is written to the NAND flash memory 214 with data from block 0 as a single write request, upon eviction of the data from block 0. The cache manager 206 sends the single write request to update page 0 of the NAND flash memory 214.

A dirty bit for all blocks of page 0 is set to 0 in the cache 218 to indicate that the respective data is in the NAND flash memory 214. For example, as shown in cache details 502 of FIG. 5, when the blocks of the cache 218 are filled with data from write requests 1 through N, each block is assigned a valid bit of 1 and a dirty bit of 1. After evicting data from block 0 and writing data from all dirty blocks of page 0 to the NAND flash memory 214, block 0 is assigned a valid bit of 0, and blocks 2, N-1, and N are assigned a dirty bit of 0, as shown in updated cache details 504 of FIG. 5. Accordingly, the cache 218 denotes that data from block 0 has been evicted and data from blocks 2, N-1, and N has been written to the NAND flash memory 214 of the SSD.

Accordingly, in writing data corresponding to an evicted block and all dirty blocks of a same page, fewer backend writes are required to the NAND flash memory 214. While these async writes minimize the number of writes to the NAND flash memory 214, they may also result in potential inconsistencies. Accordingly, the SSD controller 202 may selectively perform a first mode for async writes and a second mode for sync writes in which every write request is provided to the NAND flash memory.

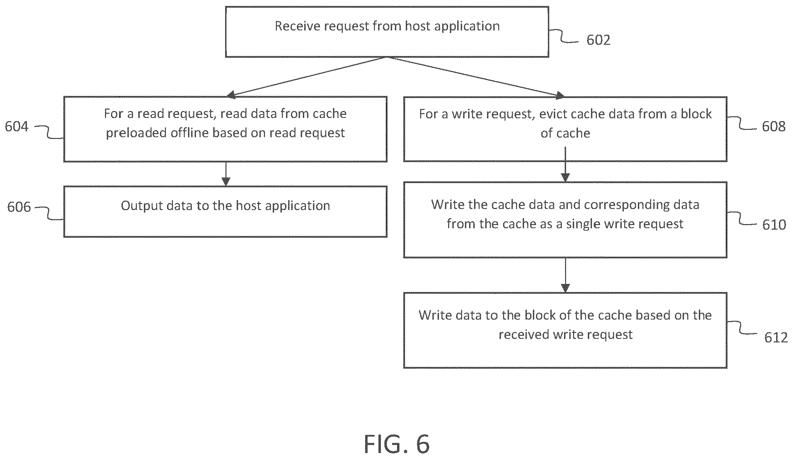

FIG. 6 is a diagram illustrating a method for efficiently accessing an SSD hardware cache, according to an embodiment. At 602, a request is received from a host application at an SSD controller. The request may be a read request or a write request. When the request is a read request, data is read from the cache based on the read request, at 604. The cache may be preloaded with data at predefined intervals while the SSD is offline. At 606, the data is provided from the cache to the host application.

When the request is a write request, cache data is evicted from a block of the cache, when the cache is full, at 608. At 610, the cache data and corresponding data is written from the cache to the NAND flash memory as a single write request. A cache manager may maintain a list of dirty blocks of the cache per page of the NAND flash memory. The corresponding data may be from one or more blocks of a same flash memory page as the block from which the cache data is evicted. Specifically, the one or more blocks may be dirty blocks having a dirty bit set to 1 in the cache. After writing the cache data and the corresponding data to the NAND flash memory, the dirty bit of the one or more blocks may be set to 0 in the cache. At 612, data is written to the block of the cache based on the received write request.

The cache type may be set associate or direct mapped, and the cache replacement policies may include LRU, LFU, etc.

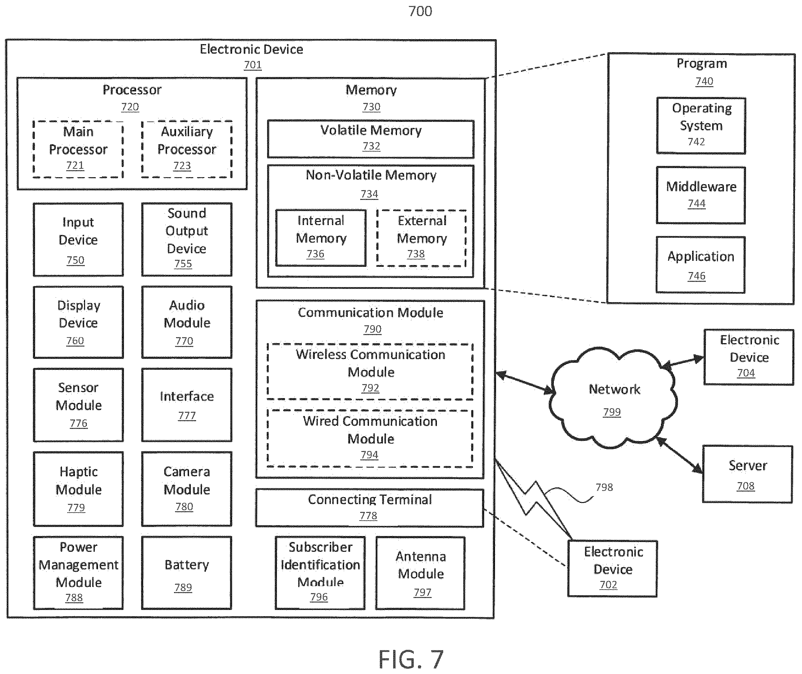

FIG. 7 illustrates a block diagram of an electronic device 701 in a network environment 700, according to one embodiment. Referring to FIG. 7, the electronic device 701 in the network environment 700 may communicate with an electronic device 702 via a first network 798 *(e.g.,* a short-range wireless communication network), or an electronic device 704 or a server 708 via a second network 799 *(e.g.,* a long-range wireless communication network). The electronic device 701 may communicate with the electronic device 704 via the server 708. The electronic device 701 may include a processor 720, a memory 730, an input device 750, a sound output device 755, a display device 760, an audio module 770, a sensor module 776, an interface 777, a haptic module 779, a camera module 780, a power management module 788, a battery 789, a communication module 790, a subscriber identification module (SIM) 796, or an antenna module 797. In one embodiment, at least one (*e.g.,* the display device 760 or the camera module 780) of the components may be omitted from the electronic device 701, or one or more other components may be added to the electronic device 701. In one embodiment, some of the components may be implemented as a single integrated circuit (IC). For example, the sensor module 776 (*e.g.,* a fingerprint sensor, an iris sensor, or an illuminance sensor) may be embedded in the display device 760 (*e.g.,* a display).

The processor 720 may execute, for example, software (*e.g.*, a program 740) to control at least one other component (*e.g*., a hardware or a software component) of the electronic device 701 coupled with the processor 720, and may perform various data processing or computations. The processor may correspond to the HCPU, or a combination of the HCPU, embedded CPUs, and/or NAND CPUs of the SSD. As at least part of the data processing or computations, the processor 720 may load a command or data received from a host or another component (*e.g*., the sensor module 776 or the communication module 790) in volatile memory 732, process the command or the data stored in the volatile memory 732, and store resulting data in non-volatile memory 734. The processor 720 may include a main processor 721 (*e.g.,* a CPU or an application processor (AP)), and an auxiliary processor 723 (*e.g.,* a graphics processing unit (GPU), an image signal processor (ISP), a sensor hub processor, or a communication processor (CP)) that is operable independently from, or in conjunction with, the main processor 721. Additionally or alternatively, the auxiliary processor 723 may be adapted to consume less power than the main processor 721, or execute a particular function. The auxiliary processor 723 may be implemented as being separate from, or a part of, the main processor 721.

The auxiliary processor 723 may control at least some of the functions or states related to at least one component (*e.g.*, the display device 760, the sensor module 776, or the communication module 790) among the components of the electronic device 701, instead of the main processor 721 while the main processor 721 is in an inactive (*e.g*., sleep) state, or together with the main processor 721 while the main processor 721 is in an active state (*e.g*., executing an application). According to one embodiment, the auxiliary processor *723* (*e.g.,* an image signal processor or a communication processor) may be implemented as part of another component (*e.g.*, the camera module 780 or the communication module 790) functionally related to the auxiliary processor 723.

The memory 730 may store various data used by at least one component (*e.g.,* the processor 720 or the sensor module 776) of the electronic device 701. The various data may include, for example, software (*e.g.*, the program 740) and input data or output data for a command related thereto. The memory 730 may include the volatile memory 732 or the non-volatile memory 734.

The program 740 may be stored in the memory 730 as software, and may include, for example, an operating system (OS) 742, middleware 744, or an application 746.

The input device 750 may receive a command or data to be used by another component (*e.g.,* the processor 720) of the electronic device 701, from the outside (*e.g.*, a user) of the electronic device 701. The input device 750 may include, for example, a microphone, a mouse, or a keyboard.

The sound output device 755 may output sound signals to the outside of the electronic device 701. The sound output device 755 may include, for example, a speaker or a receiver. The speaker may be used for general purposes, such as playing multimedia or recording, and the receiver may be used for receiving an incoming call. According to one embodiment, the receiver may be implemented as being separate from, or a part of, the speaker.

The display device 760 may visually provide information to the outside (*e.g.,* a user) of the electronic device 701. The display device 760 may include, for example, a display, a hologram device, or a projector and control circuitry to control a corresponding one of the display, hologram device, and projector. According to one embodiment, the display device 760 may include touch circuitry adapted to detect a touch, or sensor circuitry (*e.g.,* a pressure sensor) adapted to measure the intensity of force incurred by the touch.

The audio module 770 may convert a sound into an electrical signal and vice versa. According to one embodiment, the audio module 770 may obtain the sound via the input device 750, or output the sound via the sound output device 755 or a headphone of an external electronic device 702 directly (*e.g*., wired) or wirelessly coupled with the electronic device 701.

The sensor module 776 may detect an operational state (*e.g*., power or temperature) of the electronic device 701 or an environmental state (*e.g.,* a state of a user) external to the electronic device 701, and then generate an electrical signal or data value corresponding to the detected state. The sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device 702 directly (*e.g.,* wired) or wirelessly. According to one embodiment, the interface 777 may include, for example, a high definition multimedia interface (HDMI), a universal serial bus (USB) interface, a secure digital (SD) card interface, or an audio interface.

A connecting terminal 778 may include a connector via which the electronic device 701 may be physically connected with the external electronic device 702. According to one embodiment, the connecting terminal 778 may include, for example, an HDMI connector, a USB connector, an SD card connector, or an audio connector (*e.g.,* a headphone connector).

The haptic module 779 may convert an electrical signal into a mechanical stimulus (*e.g.*, a vibration or a movement) or an electrical stimulus which may be recognized by a user via tactile sensation or kinesthetic sensation. According to one embodiment, the haptic module 779 may include, for example, a motor, a piezoelectric element, or an electrical stimulator.

The camera module 780 may capture a still image or moving images. According to one embodiment, the camera module 780 may include one or more lenses, image sensors, image signal processors, or flashes.

The power management module 788 may manage power supplied to the electronic device 701. The power management module 788 may be implemented as at least part of, for example, a power management integrated circuit (PMIC).

The battery 789 may supply power to at least one component of the electronic device 701. According to one embodiment, the battery 789 may include, for example, a primary cell which is not rechargeable, a secondary cell which is rechargeable, or a fuel cell.

The communication module 790 may support establishing a direct (*e.g.,* wired) communication channel or a wireless communication channel between the electronic device 701 and the external electronic device (*e.g.,* the electronic device 702, the electronic device 704, or the server 708) and performing communication via the established communication channel. The communication module 790 may include one or more communication processors that are operable independently from the processor 720 (*e.g.,* the AP) and supports a direct (*e.g*., wired) communication or a wireless communication. According to one embodiment, the communication module 790 may include a wireless communication module 792 (*e.g.,* a cellular communication module, a short-range wireless communication module, or a global navigation satellite system (GNSS) communication module) or a wired communication module 794 (*e.g.,* a local area network (LAN) communication module or a power line communication (PLC) module). A corresponding one of these communication modules may communicate with the external electronic device via the first network 798 (*e.g.,* a short-range communication network, such as Bluetooth^{™}, wireless-fidelity (Wi-Fi) direct, or a standard of the Infrared Data Association (IrDA)) or the second network 799 (*e.g.,* a long-range communication network, such as a cellular network, the Internet, or a computer network (*e.g*., LAN or wide area network (WAN)). These various types of communication modules may be implemented as a single component (*e.g*., a single IC), or may be implemented as multiple components (*e.g*., multiple ICs) that are separate from each other. The wireless communication module 792 may identify and authenticate the electronic device 701 in a communication network, such as the first network 798 or the second network 799, using subscriber information (*e.g*., international mobile subscriber identity (IMSI)) stored in the subscriber identification module 796.

The antenna module 797 may transmit or receive a signal or power to or from the outside (*e.g.,* the external electronic device) of the electronic device 701. According to one embodiment, the antenna module 797 may include one or more antennas, and, therefrom, at least one antenna appropriate for a communication scheme used in the communication network, such as the first network 798 or the second network 799, may be selected, for example, by the communication module 790 (*e.g.,* the wireless communication module 792). The signal or the power may then be transmitted or received between the communication module 790 and the external electronic device via the selected at least one antenna.

At least some of the above-described components may be mutually coupled and communicate signals (*e.g*., commands or data) therebetween via an inter-peripheral communication scheme (*e.g.,* a bus, a general purpose input and output (GPIO), a serial peripheral interface (SPI), or a mobile industry processor interface (MIPI)).

According to one embodiment, commands or data may be transmitted or received between the electronic device 701 and the external electronic device 704 via the server 708 coupled with the second network 799. Each of the electronic devices 702 and 704 may be a device of a same type as, or a different type, from the electronic device 701. All or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 701. The electronic device 701 may provide the outcome, with or without further processing of the outcome, as at least part of a reply to the request. To that end, a cloud computing, distributed computing, or client-server computing technology may be used, for example.

One embodiment may be implemented as software (*e.g*., the program 740) including one or more instructions that are stored in a storage medium (*e.g*., internal memory 736 or external memory 738) that is readable by a machine (*e.g*., the electronic device 701). For example, a processor of the electronic device 701 may invoke at least one of the one or more instructions stored in the storage medium, and execute it, with or without using one or more other components under the control of the processor. Thus, a machine may be operated to perform at least one function according to the at least one instruction invoked. The one or more instructions may include code generated by a complier or code executable by an interpreter. A machine-readable storage medium may be provided in the form of a non-transitory storage medium. The term "non-transitory" indicates that the storage medium is a tangible device, and does not include a signal (*e.g.,* an electromagnetic wave), but this term does not differentiate between where data is semi-permanently stored in the storage medium and where the data is temporarily stored in the storage medium.

According to one embodiment, a method of the disclosure may be included and provided in a computer program product. The computer program product may be traded as a product between a seller and a buyer. The computer program product may be distributed in the form of a machine-readable storage medium (*e.g*., a compact disc read only memory (CD-ROM)), or be distributed (*e.g*., downloaded or uploaded) online via an application store (*e.g.,* Play Store^{™}), or between two user devices (*e.g.,* smart phones) directly. If distributed online, at least part of the computer program product may be temporarily generated or at least temporarily stored in the machine-readable storage medium, such as memory of the manufacturer's server, a server of the application store, or a relay server.

According to one embodiment, each component (*e.g*., a module or a program) of the above-described components may include a single entity or multiple entities. One or more of the above-described components may be omitted, or one or more other components may be added. Alternatively or additionally, a plurality of components (*e.g*., modules or programs) may be integrated into a single component. In this case, the integrated component may still perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

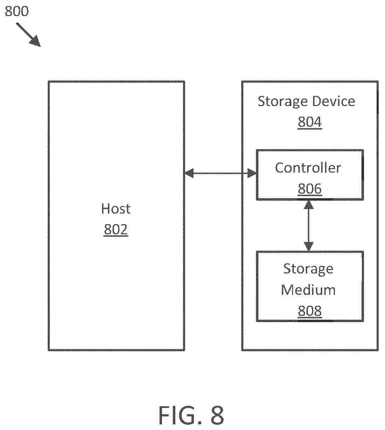

FIG. 8 illustrates a diagram of a storage system 800, according to an embodiment. The storage system 800 includes a host 802 and a storage device 804. Although one host and one storage device is depicted, the storage system 800 may include multiple hosts and/or multiple storage devices. The storage device 804 may be an SSD, a universal flash storage (UFS), etc. The storage device 804 includes a controller 806 and a storage medium 808 connected to the controller 806. The controller 806 may be an SSD controller, a UFS controller, etc. The storage medium 808 may include a volatile memory, a non-volatile memory, or both, and may include one or more flash memory chips (or other storage media). The controller 806 may include one or more processors, one or more error correction circuits, one or more field programmable gate arrays (FPGAs), one or more host interfaces, one or more flash bus interfaces, etc., or a combination thereof. The controller 806 may be configured to facilitate transfer of data/commands between the host 802 and the storage medium 808. The host 802 sends data/commands to the storage device 804 to be received by the controller 806 and processed in conjunction with the storage medium 808. As described herein, the methods, processes and algorithms may be implemented on a storage device controller, such as controller 806. The arbiters, command fetchers, and command processors may be implemented in the controller 806 of the storage device 804, and the processors and buffers may be implemented in the host 802.

## Claims

1. A method, comprising:
receiving a write request from a host device at a memory device;
modifying a block of a cache (118, 218) of the memory device to remove cache data;
writing, to a flash memory (114, 214) of the memory device, the cache data and corresponding data from the cache (118, 218) as a single write request; **characterised by**
writing first data to the block of the cache (118, 218) based on the received write request;
loading the cache (118, 218) with data with the memory device in a first state;
receiving a read request from the host device with the memory device in a second state;
reading second data from the cache (118, 218) based on the read request; and
outputting the second data to the host device.

2. The method of claim 1, wherein the cache (118, 218) is full based on receiving the write request.

3. The method of claim 1 or 2, wherein a cache manager (110, 210) of a controller (102, 202) of the memory device maintains a list of dirty blocks per flash memory (114, 214) page.

4. The method of any one of claims 1 to 3, wherein the corresponding data is from one or more blocks of a same flash memory page as the block from which the cache data is evicted.

5. The method of claim 4, wherein the one or more blocks are indicated as dirty blocks in the cache (118, 218).

6. The method of claim 5, further comprising, after writing the cache data and the corresponding data to the flash memory (114, 214), removing an indication that the one or more blocks are dirty blocks.

7. The method of any one of claims 1 to 6, wherein a size of the first data is smaller than that of a page of the flash memory (114, 214).

8. The method of any one of claims 1 to 7, wherein the cache (118, 218) is loaded based on a heuristic-based program.

9. A memory device, comprising:
a cache (118, 218);
a flash memory (114, 214);
a controller (102, 202) configured to receive a write request from a host device; and
a cache manager (110, 210) of the controller (102, 202) configured to:
modify a block of the cache (118, 218) to remove cache data;
write, to the flash memory (114, 214), the cache data and corresponding data from the cache (118, 218) as a single write request; **characterised in that** the cache manager is further configured to:
write first data to the block of the cache (118, 218) based on the received write request;
load the cache (118, 218) with data with the memory device in a first state;
receive a read request from the host device with the memory device in a second state;
read second data from the cache (118, 218) based on the read request; and
output the second data to the host device.

10. The memory device of claim 9, wherein the cache (118, 218) is full based on receiving the write request.

11. The memory device of claim 9 or 10, wherein the cache manager (110, 210) is further configured to maintain a list of dirty blocks per flash memory (114, 214) page.

12. The memory device of any one of claims 9 to 11, wherein the corresponding data is from one or more blocks of a same flash memory page as the block from which the cache data is evicted.

13. The memory device of claim 12, wherein the one or more blocks are indicated as dirty blocks.

14. The memory device of claim 13, wherein, after writing the cache data and the corresponding data to the flash memory (114, 214), removing an indication that the one or more blocks are dirty blocks.

## Patentansprüche

1. Verfahren, aufweisend:
Empfangen einer Schreibanfrage von einer Hostvorrichtung an einer Speichervorrichtung;
Modifizieren eines Blocks eines Caches (118, 218) der Speichervorrichtung, um Cachedaten zu entfernen;
Schreiben der Cachedaten und entsprechender Daten von dem Cache (118, 218) in einen Flashspeicher (114, 214) der Speichervorrichtung als eine einzelne Schreibanfrage;
**gekennzeichnet durch**
Schreiben erster Daten in den Block des Caches (118, 218) auf Basis der empfangenen Schreibanfrage;
Laden des Caches (118, 218) mit Daten mit der Speichervorrichtung in einem ersten Zustand;
Empfangen einer Leseanfrage von der Hostvorrichtung mit der Speichervorrichtung in einem zweiten Zustand;
Lesen von zweiten Daten von dem Cache (118, 218) auf Basis der Leseanfrage; und
Ausgeben der zweiten Daten an die Hostvorrichtung.

2. Verfahren nach Anspruch 1, wobei der Cache (118, 218) auf Basis des Empfangens der Schreibanfrage voll ist.

3. Verfahren nach Anspruch 1 oder 2, wobei ein Cachemanager (110, 210) eines Controllers (102, 202) der Speichervorrichtung eine Liste schmutziger Blöcke pro Seite des Flashspeichers (114, 214) führt.

4. Verfahren nach einem der Ansprüche 1 bis 3, wobei die entsprechenden Daten von einem oder mehreren Blöcken einer selben Flashspeicherseite stammen wie der Block, aus dem die Cachedaten verlagert werden.

5. Verfahren nach Anspruch 4, wobei der eine oder die mehreren Blöcke als schmutzige Blöcke in dem Cache (118, 218) indiziert sind.

6. Verfahren nach Anspruch 5, ferner aufweisend, nach dem Schreiben der Cachedaten und der entsprechenden Daten in den Flashspeicher (114, 214), Entfernen eines Anzeichens, dass der eine oder die mehreren Blöcke schmutzige Blöcke sind.

7. Verfahren nach einem der Ansprüche 1 bis 6, wobei eine Größe der ersten Daten geringer ist als diejenige einer Seite des Flashspeichers (114, 214).

8. Verfahren nach einem der Ansprüche 1 bis 7, wobei der Cache (118, 218) auf Basis eines heuristikbasierten Programms geladen wird.

9. Speichervorrichtung, aufweisend:
einen Cache (118, 218);
einen Flashspeicher (114, 214);
einen Controller (102, 202), der dafür ausgelegt ist, eine Schreibanfrage von einer Hostvorrichtung zu empfangen; und
einen Cachemanager (110, 210) des Controllers (102, 202), der dafür ausgelegt ist:
einen Block des Caches (118, 218) zu modifizieren, um Cachedaten zu entfernen;
die Cachedaten und entsprechender Daten von dem Cache (118, 218) in den Flashspeicher (114, 214) als eine einzelne Schreibanfrage zu schreiben;
**dadurch gekennzeichnet, dass** der Cachemanager ferner dafür ausgelegt ist:
erste Daten auf Basis der empfangenen Schreibanfrage in den Block des Caches (118, 218) zu schreiben;
den Cache (118, 218) mit Daten zu laden mit der Speichervorrichtung in einem ersten Zustand;
eine Leseanfrage von der Hostvorrichtung zu empfangen mit der Speichervorrichtung in einem zweiten Zustand;
zweite Daten von dem Cache (118, 218) auf Basis der Leseanfrage zu lesen; und
die zweiten Daten an die Hostvorrichtung auszugeben.

10. Speichervorrichtung nach Anspruch 9, wobei der Cache (118, 218) auf Basis des Empfangens der Schreibanfrage voll ist.

11. Speichervorrichtung nach Anspruch 9 oder 10, wobei der Cachemanager (110, 210) ferner dafür ausgelegt ist, eine Liste mit schmutzigen Blöcken pro Seite des Flashspeichers (114, 214) zu führen.

12. Speichervorrichtung nach einem der Ansprüche 9 bis 11, wobei die entsprechenden Daten von einem oder mehreren Blöcken einer selben Flashspeicherseite stammen wie der Block, von dem die Cachedaten ausgelagert werden.

13. Speichervorrichtung nach Anspruch 12, wobei der eine oder die mehreren Blöcke als schmutzige Blöcke indiziert sind.

14. Speichervorrichtung nach Anspruch 13, wobei nach dem Schreiben der Cachedaten und der entsprechenden Daten in den Flashspeicher (114, 214) ein Anzeichen, dass der eine oder die mehreren Blöcke schmutzige Blöcke sind, entfernt wird.

## Revendications

1. Procédé, comprenant les étapes consistant à:
recevoir une requête d'écriture provenant d'un dispositif hôte au niveau d'un dispositif de mémoire;
modifier un bloc d'un cache (118, 218) du dispositif de mémoire pour supprimer des données de cache;
écrire, dans une mémoire flash (114, 214) du dispositif de mémoire, les données de cache et les données correspondantes provenant du cache (118, 218) en tant qu'une seule requête d'écriture;
**caractérisé par** les étapes suivantes consistant à:
écrire des premières données dans le bloc du cache (118, 218) sur la base de la requête d'écriture reçue;
charger le cache (118, 218) avec des données avec le dispositif de mémoire dans un premier état;
recevoir une requête de lecture provenant du dispositif hôte avec le dispositif de mémoire dans un second état;
lire des secondes données à partir du cache (118, 218) sur la base de la requête de lecture; et
fournir les secondes données au dispositif hôte.

2. Procédé selon la revendication 1, dans lequel le cache (118, 218) est plein sur la base de la réception de la requête d'écriture.

3. Procédé selon la revendication 1 ou 2, dans lequel un gestionnaire de cache (110, 210) d'un contrôleur (102, 202) du dispositif de mémoire maintient une liste de blocs modifiés par page de mémoire flash (114, 214).

4. Procédé selon l'une quelconque des revendications 1 à 3, dans lequel les données correspondantes proviennent d'un ou plusieurs blocs d'une même page de mémoire flash que le bloc à partir duquel les données de cache sont évincées.

5. Procédé selon la revendication 4, dans lequel le ou les blocs sont indiqués comme étant des blocs modifiés dans le cache (118, 218).

6. Procédé selon la revendication 5, comprenant en outre, après l'écriture des données de cache et des données correspondantes dans la mémoire flash (114, 214), la suppression de l'indication selon laquelle le ou les blocs sont des blocs modifiés.

7. Procédé selon l'une quelconque des revendications 1 à 6, dans lequel une taille des premières données est inférieure à celle d'une page de la mémoire flash (114, 214).

8. Procédé selon l'une quelconque des revendications 1 à 7, dans lequel le cache (118, 218) est chargé sur la base d'un programme fondé sur des heuristiques.

9. Dispositif de mémoire, comprenant:
un cache (118, 218);
une mémoire flash (114, 214);
un contrôleur (102, 202) configuré pour recevoir une requête d'écriture provenant d'un dispositif hôte; et
un gestionnaire de cache (110, 210) du contrôleur (102, 202) configuré pour:
modifier un bloc du cache (118, 218) afin de supprimer des données de cache;
écrire, dans la mémoire flash (114, 214), les données de cache et les données correspondantes provenant du cache (118, 218) en tant qu'une seule requête d'écriture;
**caractérisé en ce que** le gestionnaire de cache est en outre configuré pour:
écrire des premières données dans le bloc du cache (118, 218) sur la base de la requête d'écriture reçue;
charger le cache (118, 218) avec des données avec le dispositif de mémoire dans un premier état;
recevoir une requête de lecture provenant du dispositif hôte avec le dispositif de mémoire dans un second état;
lire des secondes données à partir du cache (118, 218) sur la base de la requête de lecture; et
fournir les secondes données au dispositif hôte.

10. Dispositif de mémoire selon la revendication 9, dans lequel le cache (118, 218) est plein sur la base de la réception de la requête d'écriture.

11. Dispositif de mémoire selon la revendication 9 ou 10, dans lequel le gestionnaire de cache (110, 210) est en outre configuré pour maintenir une liste de blocs modifiés par page de mémoire flash (114, 214).

12. Dispositif de mémoire selon l'une quelconque des revendications 9 à 11, dans lequel les données correspondantes proviennent d'un ou plusieurs blocs d'une même page de mémoire flash que le bloc à partir duquel les données de cache sont évincées.

13. Dispositif de mémoire selon la revendication 12, dans lequel le ou les blocs sont indiqués comme étant des blocs modifiés.

14. Dispositif de mémoire selon la revendication 13, dans lequel, après l'écriture des données de cache et des données correspondantes dans la mémoire flash (114, 214), l'indication selon laquelle le ou les blocs sont des blocs modifiés est supprimée.
